Europäisches Patentamt

European Patent Office

Office européen des brevets

(19)

(11) Numéro de publication: **0 376 790**
**A1**

(12) **DEMANDE DE BREVET EUROPEEN**

(21) Numéro de dépôt: **89403504.7**

(22) Date de dépôt: **15.12.89**

(51) Int. Cl.5: **G11B 5/31, G11B 5/133,**
**G11B 5/187**

(30) Priorité: **27.12.88 FR 8817217**

(43) Date de publication de la demande:
**04.07.90 Bulletin 90/27**

(84) Etats contractants désignés:
**DE GB IT NL**

(71) Demandeur: **THOMSON-CSF**
**51, Esplanade du Général de Gaulle**
**F-92800 Puteaux(FR)**

(72) Inventeur: **Meunier, Paul-Louis**
**THOMSON-CSF SCPI Cédex 67**
**F-92045 Paris la Défense(FR)**
Inventeur: **Coutellier, Jean-Marc**
**THOMSON-CSF SCPI Cédex 67**
**F-92045 Paris la Défense(FR)**
Inventeur: **Letexier, Françoise**
**THOMSON-CSF SCPI Cédex 67**
**F-92045 Paris la Défense(FR)**
Inventeur: **Jacobelli, Alain**
**THOMSON-CSF SCPI Cédex 67**
**F-92045 Paris la Défense(FR)**

(74) Mandataire: **Grynwald, Albert et al**
**THOMSON-CSF SCPI**
**F-92045 PARIS LA DEFENSE CEDEX 67(FR)**

(54) **Procédé de fabrication de têtes magnétiques planaires, et têtes magnétiques obtenues par un tel procédé.**

(57) Le domaine de l'invention est celui de la fabrication simultanée d'une pluralité de têtes planaires magnétiques sur un substrat tridimensionnel destiné à être découpé pour séparer chaque tête.

Selon l'invention, on réalise une matrice de perçages ($31_{x,y}$) dans un bloc magnétique tridimensionnel (30) ; on injecte un matériau non magnétique dans lesdits perçages ($31_{xy}$) ; on réalise une paire de perçages latéraux ($32_{xy}$, $33_{xy}$) symétriques, parallèles, de part et d'autre de chacune desdites injections $31xy$ de matériau non magnétique ;

on découpe le bloc (30) en galettes, puis on individualise des têtes magnétiques dans chaque galette après formation de micro-ouvertures dans un dépôt de matériau magnétique en couche mince sur la galette.

Fig. 3

# Procédé de fabrication de têtes magnétiques planaires, et têtes magnétiques obtenues par un tel procédé.

Le domaine de l'invention est celui de la fabrication simultanée d'une pluralité de têtes planaires magnétiques sur une galette tridimensionnelle destinée a être découpée pour séparer chaque tête. Les têtes planaires magnétiques sont utilisées notamment pour l'écriture ou la lecture de bandes magnétiques du type utilisé dans les magnétophones et les magnétoscopes ou autres.

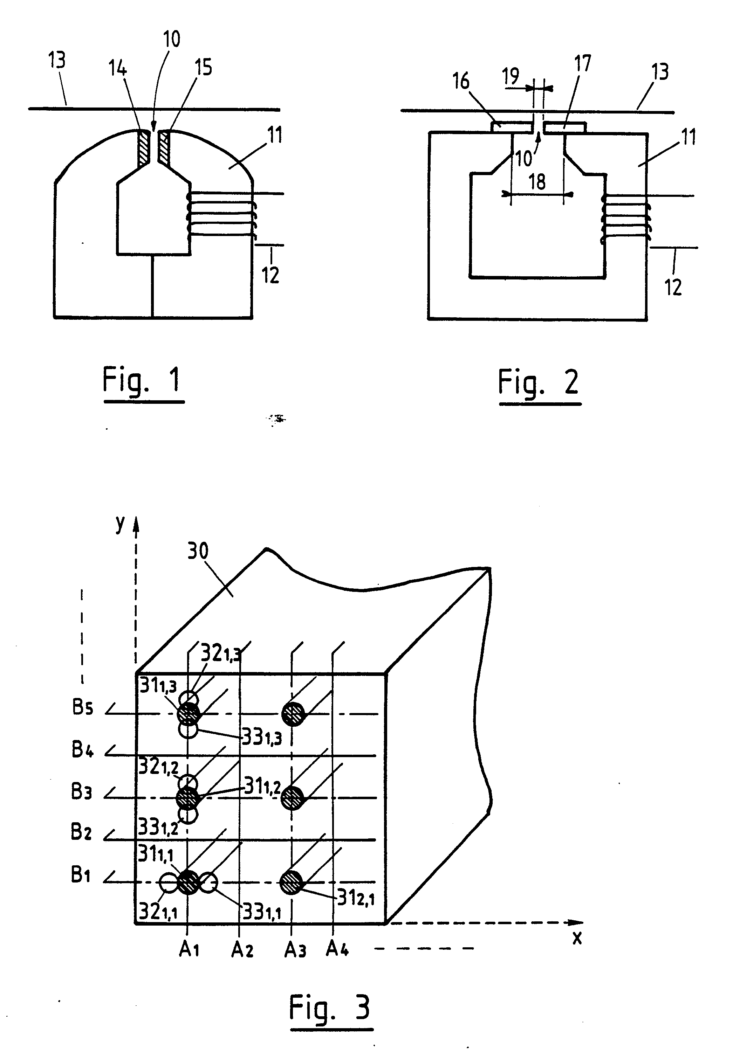

On connaît une première structure de têtes magnétiques consistant à dégager un entrefer 10 dans un substrat magnétique 11 à bobinage 12 (Fig.1). Dans ce type de tête magnétique connu, on utilise le flux variable induit au voisinage de l'entrefer 10 par la variation de l'excitation provoquée par le bobinage 12 pour écrire sur une bande magnétique mobile 13. Inversement, la lecture de la bande magnétique s'effectue par induction dans le bobinage 12 des variations de champ magnétique dans le substrat 11 provoquées par les transitions entre domaines aimantés de la bande magnétique 13 captées par l'entrefer 10.

Avec ce type de têtes magnétiques, on s'est heurté à la difficulté d'augmenter la densité d'informations magnétiques susceptibles d'être écrites ou lues sur la bande magnétique 13. En effet, l'augmentation de la densité passe notamment par l'augmentation de l'intensité des flux magnétiques de lecture ou d'écriture pour travailler avec des bandes magnétiques à forte coërcivité. Or, au-delà d'une certaine quantité de flux magnétique, le ferrite présente un phénomène de saturation. Pour pallier cet inconvénient, on a rapporté, de façon connue, des couches magnétiques 14, 15 à forte aimantation à saturation (têtes MIG) sur les faces opposées de l'entrefer 10. Cette technologie présente toutefois l'inconvénient d'être d'une mise en oeuvre complexe, et de ne pas être totalement satisfaisante d'un point de vue industriel du fait que le plan de dépôt des couches est perpendiculaire au plan de défilement des pistes magnétiques 13.

On a alors développé des têtes magnétiques à structure planaire telles que représentées en figure 2. Selon cette nouvelle conception, on rapporte des couches minces 16, 17 en matériau magnétique, au niveau de l'entrefer 10, dans un plan parallèle au plan de circulation de la piste magnétique 13. Le matériau constitutif des couches minces 16, 17 est choisi de façon à engendrer un champ magnétique plus intense que le matériau de substrat magnétique 11, de façon à écrire sur des milieux magnétiques 13 à forte coercivité. Cette technologie correspond à un fonctionnement différent des têtes, qui présente notamment des propriétés intéressantes en haute fréquence. Une application avantageuse concerne les têtes tournantes, permettant de travailler à des forts débits (plusieurs dizaines Mbits/s).

Dans ce type de têtes planaires magnétiques, on distingue d'une part la macro-ouverture 18 de l'entrefer (macrogap), par exemple de l'ordre de 200 à 300 μm, et d'autre part la micro-ouverture 19 de l'entrefer (microgap), entre les deux couches minces déposées 16, 17, de l'ordre de 0,2 à 0,3μm. Ces dimensions sont données à titre illustratif et non limitatif.

L'invention concerne un procédé de réalisation de têtes planaires de ce type.

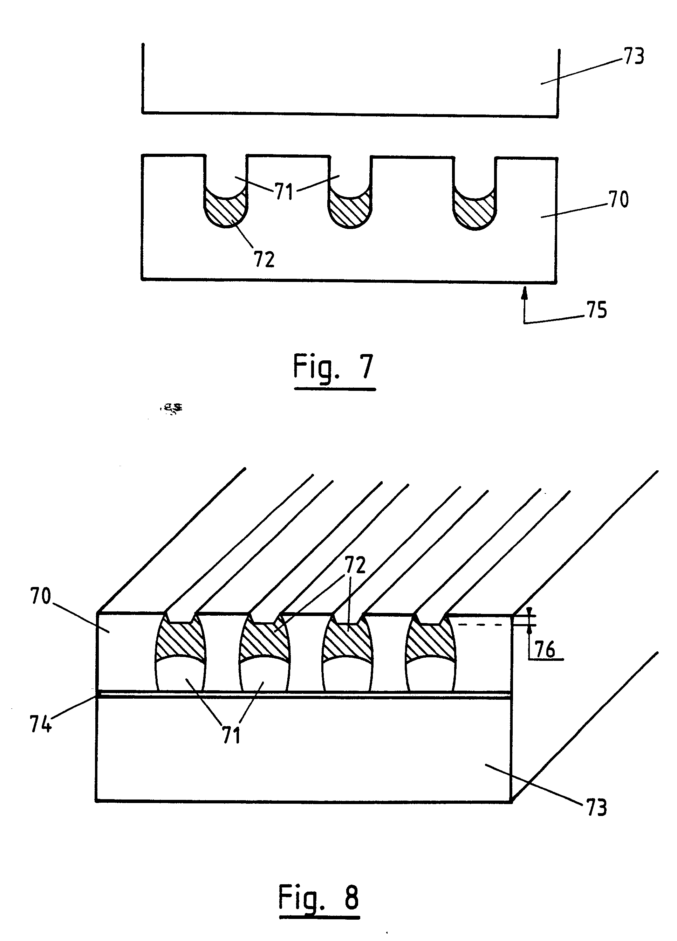

On connaît un procédé de réalisation de têtes planaires comme illustré aux figures 7 et 8. Selon ce procédé, on usine des gorges 71 dans un substrat de ferrite 70, puis on remplit partiellement le fond des gorges usinées 71 par un matériau non magnétique tel que le verre 72. Une contrepièce en ferrite 73 est ensuite rapportée sur le substrat 70, avec un joint de colle 74 (figure 8). La face externe 75 du substrat 68 est ensuite usinée puis polie de façon à faire affleurer les barettes 72 en matériau non magnétique.

Après mise en place des couches minces 16,17, les têtes planaires magnétiques sont ensuite individualisées par découpage dans le substrat, après dépôt de couches minces, et découpage des micro-ouvertures.

Ce procédé présente l'inconvénient de provoquer un rétreint 76 de la surface des barettes 72 en verre, par rapport au plan supérieur du substrat de ferrite 70, lors de l'opération de polissage. Ce rétreint est naturellement de l'ordre de 1 μm, et ne peut guère être ramené en dessous de 0,4 μm environ après un effort particulier de polissage . (avec liant, grains,...). Il est principalement dû à la différence de résistance des matériaux lors de l'opération d'usinage, et s'explique notamment par le phénomène de "peau de tambour" provoquant des déchaussages de grains de ferrite.

Ce rétreint provoque une inégalité sur la surface des têtes, qui est pénalisante pour le dépôt de matériaux à forte anisotropie (de type Sendust), ou pour le dépôt des couches minces. On a constaté que la valeur du rétreint pouvait être diminué en augmentant l'épaisseur des barettes de verre 72. Toutefois, cette méthode n'est pas toujours utilisable car elle conduit à augmenter la distance entre les pôles de la tête magnétique et les bobinages lovés sous le matériau non magnétique 72 autour des "piliers" de ferrites.

L'invention a pour objectif de fournir un procédé permettant de pallier cet inconvénient.

L'objectif de l'invention est donc de fournir un procédé de réalisation de têtes planaires jusqu'à réalisation des macrogaps, qui permette la fabrication simultanée d'une pluralité de têtes planaires, au cours d'un processus collectif (procédé tridimentionnel).

Ces objectifs ainsi que d'autres qui apparaitront par la suite sont atteints à l'aide d'un procédé de fabrication de têtes magnétiques planaires, notamment pour l'encodage et la lecture de bandes magnétiques, lesdites têtes magnétiques étant du type présentant un entrefer dégagé dans un matériau magnétique à bobinage, caractérisé en ce qu'il comporte les étapes suivantes :

. on réalise une matrice de perçages dans un bloc magnétique tridimensionnel ;

on injecte un matériau non magnétique dans lesdits perçages ;

on réalise une paire de perçages latéraux, symétriques, parallèles, de part et d'autre de chacune desdites injections de matériaux non magnétiques ;

on découpe ledit bloc selon des plans perpendiculaires aux plans de jonction desdits perçages latéraux, et passant par lesdites injections de matériau non magnétique, de façon à découper des galettes à barrettes non magnétiques parallèles en affleurement de la surface de galette ;

. on découpe des têtes magnétiques au niveau des barrettes de chacune desdites galettes.

De cette manière, on réalise simultanément un très grand nombre de têtes planaires, sur plusieurs étages, selon un processus tridimensionnel. Ceci est tout à fait avantageux du point de vue du coût de revient unitaire de chaque tête planaire, de la cadence accrue de fabrication et éven-tuellement de la limitation des pertes de matière au cours du procédé de fabrication.

Selon un mode de réalisation particulier de l'invention, ladite étape de découpage de tête magnétique est précédée d'une étape de dépôt de couches minces en matériau à perméabilité magnétique élevée sur la surface de la galette et de la réalisation de pôles magnétiques tel que cela est décrit dans la demande de brevet français n° 86 14974.

Préférentiellement, ledit dépôt de couches minces en matériau à fort coefficient de coercivité est réalisé sous forme de "papillons" juxtaposés pôles magnétiques.

Le dépôt de ces couches minces en forme de "papillons" est avantageusement réalisé au moyen d'une opération d'usinage ionique, après masquage approprié de la surface de la galette.

La finition des têtes planaires est réalisée en passant les fils du bobinage d'induction dans les perçages ménagés de part et d'autre des injections de matériau non magnétique.

Avantageusement, mais de façon non limitative, le matériau magnétique est la ferrite et le matériau non magnétique est le verre, préférentiellement injecté sous pression.

Les perçages peuvent être réalisés tangentiellement, ou en recouvrement partiel des injections de matériau non magnétique. Ils peuvent revêtir, en section transversale, une forme cylindrique, oblongue, ou encore être constitués chacun d'un double perçage à contact tangentiel ou en recouvrement partiel.

D'autres caractéristiques et avantages de l'invention apparaîtront à la lecture de la description suivante d'un mode de réalisation détaillé du procédé de fabrication de l'invention, donné à titre illustratif et non limitatif et des dessins annexés dans lesquels :

. la figure 1 schématise la structure d'une tête magnétique connue classique;

. la figure 2 schématise la structure d'une tête magnétique planaire, à couches minces, et micro-ouverture;

. la figure 3 schématise la mise en oeuvre du procédé selon l'invention dans un substrat tridimensionnel ;

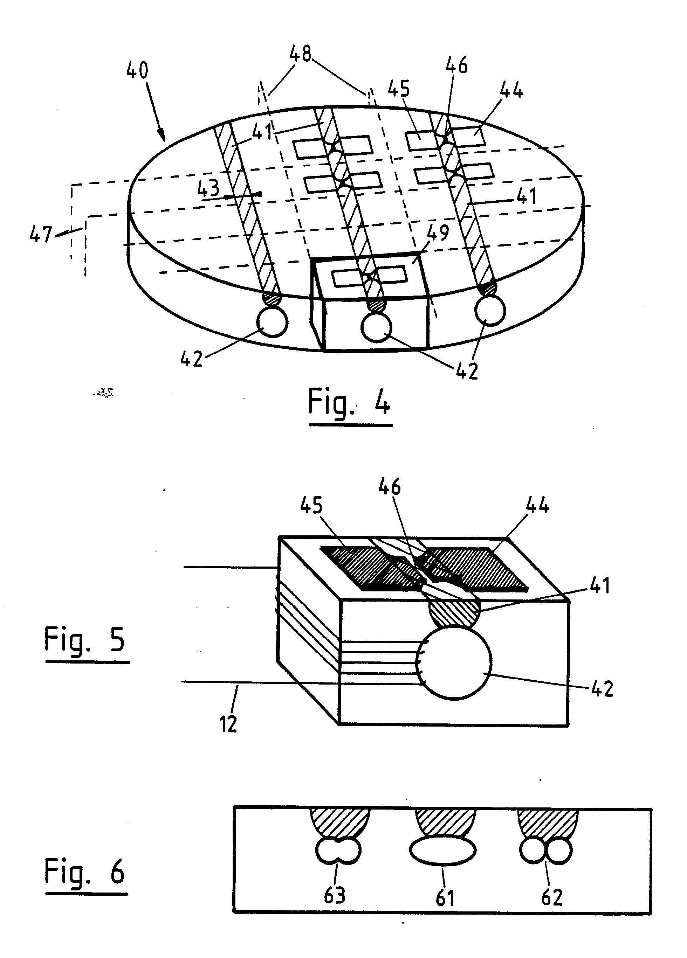

. la figure 4 schématise une galette découpée dans un substrat du type de celui de la figure 3, selon le procédé de l'invention ;

. la figure 5 représente une tête planaire obtenue selon le procédé de l'invention, avec bobinage d'induction ;

. la figure 6 schématise trois configurations supplémentaires possibles pour la géométrie des perçages latéraux aux injections de matériau non magnétique, lors de la mise en oeuvre du procédé de l'invention ;

. les figures 7 et 8 schématisent un procédé de fabrication connu de têtes planaires, dont l'invention pallie les inconvénients.

Comme représenté en figure 3, le procédé de l'invention est mis en oeuvre dans un substrat "tridimensionnel" 30, en matériau magnétique, comme par exemple la ferrite.

Le substrat 30 se présente sous la forme d'un bloc de sections quadrangulaires et/ou circulaires.

Les étapes principales du procédé sont les suivantes :

. on réalise une matrice de perçages parallèles $31_{xy}$ dans le bloc 30 magnétique. Ces perçages sont avantageusement des perçages débouchant. Leur diamètre est par exemple de 300 à 600 $\mu$m. Ces perçages peuvent être réalisés soit par un procédé mécanique, soit par un procédé laser.

. on remplit ensuite chacun des perçages $31_{xy}$ ainsi formés par un matériau non magnétique. A titre d'exemple, ce matériau non magnétique peut être du verre. Le remplissage s'effectue alors avantageusement par injection. Le verre peut être conduit à fusion par un cycle thermique ; on peut utiliser par exemple du verre du type Corning 1417 (marque de fabrique) en baguette. Il est également possible d'utiliser une poudre de type "slurry" en fusion. D'autres modes de remplissage ou d'injection des perçages par un matériau non magnétique pourront être utilisés par l'homme de métier.

L'opération de remplissage du verre est effectuée avantageusement sous pression, et peut conduire à une meilleure adhésion du verre sur le ferrite.

Consécutivement à l'opération de formation des barrettes de verre dans les perçages $31_{x,y}$, on réalise des paires de perçages $32_{x,y}$, $33_{x,y}$, latéraux, symétriques, au niveau de chacune des injections de matériau non diélectrique $31_{x,y}$. Ces perçages peuvent être effectués soit suivant l'axe des abscisses x ($32_{1,1}$ ; $33_{1,1}$) soit suivant l'axe des ordonnées y ($32_{1,2}$ ; $33_{1,2}$, et $32_{1,3}$, $33_{1,3}$).

Si le diamètre du remplissage de verre est 4 à 5 fois supérieur à celui du trou pour le logement du bobinage, alors on élimine le phénomène de "peau de tambour"

On peut envisager plusieurs modes de perçage des orifices latéraux $32_{xy}$, $33_{xy}$ :
. ces perçages peuvent être réalisés de façon tangentielle aux injections de matériau non diélectrique $31_{xy}$, comme pour les perçages $32_{1,1}$, $33_{1,1}$.
. les perçages latéraux $32_{xy}$, $33_{xy}$ peuvent être réalisés en recouvrement partiel des injections de matériau diélectrique $31_{xy}$, comme pour $32_{1,2}$, $33_{1,2}$, et $32_{1,3}$ $33_{1,3}$.

Toutes les combinaisons du plan de positionnement des perçages latéraux d'une part et de leur mode de perçage par rapport à l'injection en matériau non diélectrique correspondant d'autre part, sont envisageables.

Les perçages latéraux 32 et 33 présentent avantageusement un diamètre de 150 à 300 $\mu$m.

Le bloc 30 ainsi muni de ces injections en matériau diélectrique $31_{xy}$, et des perçages latéraux correspondant $32_{xy}$, $33_{xy}$, est ensuite tronçonné en galettes. L'opération de tronçonnage est réalisée soit suivant l'axe des x suivant des plans A1, A2, A3... soit suivant l'axe des y, selon les plans B1, B2, B3... Le découpage dans les plans A1, A2, A3 correspond au positionnement "vertical" des perçages latéraux comme pour l'élément $31_{1,1}$. Le découpage suivant les plans B1, B2, B3 correspond au positionnement "horizontal" des perçages latéraux ($31_{1,2}$, $31_{1,3}$).

Les plans impairs de découpage A1, A3, ..., B1, B3, B5, ... définissent des faces supérieures actives pour les galettes découpées. Les plans de découpage pairs A2, A4, ... B2, B4, ..., définissent les faces inférieures formant le fond des galettes découpées. La découpe peut être réalisée à la scie ou à la meule, avec un trait de quelques dizaines de microns d'épaisseur, et une précision de l'ordre de quelques microns. Au niveau des barettes $31_{xy}$ en matériau non magnétique injecté, la découpe peut être réalisée de façon à dégager des demi-barettes symétriques ou dissymétriques de part et d'autre du trait de sillage/meulage.

Suite à l'opération de découpage, chaque face active (impaire) des galettes séparées est polie de manière appropriée.

La figure 4 représente une galette 40 typique obtenue par découpage dans un bloc de ferrite de section transversale circulaire. La galette 40 comporte sur sa face active une pluralité de barettes 41 en matériau non magnétique, parallèles les unes aux autres. Ces barettes non magnétiques sont situées au-dessus d'une cavité 42, correspondant à un perçage $32_{xy}$ ou $33_{xy}$ réalisé dans le bloc de ferrite 30. La largeur 43 de chaque barette 41 correspond à la macro-ouverture 18 de la tête planaire schématisée en figure 2. Pour la réalisation des micro-ouvertures, on dépose une couche mince en matériau magnétique à coefficient de saturation élevé. On délimite enfin des "papillons" 44 dans le dépôt en couches minces, par opérations de masquage et d'usinage ionique. Les micro-ouverture 46 sont enfin délimitées entre les deux ailes 44, 45 des dépôts "papillon".

Il est enfin possible de découper la galette 40 suivant les deux jeux perpendiculaires 47, 48 de plans parallèles, de façon à individualiser chaque tête planaire 49. La figure 5 représente une tête planaire individualisée munie du bobinage d'induction 12.

Un tel mode de réalisation présente l'avantage de pouvoir contrôler précisément la position du bobinage 12 par rapport à la partie active de la tête. Il est également possible de rapprocher le bobinage des pôles de la tête par rapport aux modes de réalisation existants, par exemple à une distance de l'ordre de 100 à 200 $\mu$m.

On notera également que ce mode de réalisation évite de prévoir la présence d'une contrepièce, ce qui rend possible les recuits du matériau magnétique par exemple des recuits à 620° C de type Sendust.

En fonction de la géométrie et des caractéristiques que l'on souhaite obtenir pour la tête planaire, il est possible de réaliser des perçages latéraux de formes géométriques diverses, comme illustré en figure 6. On peut ainsi envisager de réaliser des perçages latéraux de section transversale oblongue 61, ou encore des doubles perçages adjacents, soit tangentiels 62, soit recouvrants 63. D'autres configurations et conformations géométriques apparaîtront à l'homme de métier.

De la même manière, les perçages $31_{xy}$ préalables au remplissage/injection du matériau non magnétique dans le bloc magnétique 30 peuvent prendre des configurations et conformations géométriques diverses, sans sortir du cadre de l'invention.

Pour la réalisation de têtes magnétiques de type RDAT, de dimensions 1,2 mm x 200 μ x 2,3 mm, il est possible de réaliser 20 000 têtes dans un bloc cubique de 25,4 mm de côté.

## Revendications

1. Procédé de fabrication de têtes magnétiques planaires, notamment pour l'encodage et la lecture de bandes magnétiques, lesdites têtes magnétiques étant du type présentant un entrefer dégagé dans un matériau magnétique (11) à bobinage(12), caractérisé en ce qu'il comporte les étapes suivantes :
. on réalise une matrice de premiers perçages à géométrie non limitative $(31_{xy})$ dans un bloc magnétique tridimensionnel (30) ;
. on injecte un matériau non magnétique dans lesdits perçages $(31_{xy})$ ;
. on réalise au moins des deuxièmes perçages $(32_{xy},33_{xy})$, parallèles aux premiers perçages, à proximité chacun d'une injection $(31_{xy})$ de matériau non magnétique ;
. on découpe ledit bloc (30) selon des plans (Ax,By) parallèles aux axes des premiers perçages et passant par lesdites injections de matériau non magnétique, de façon à découper des galettes (40) à barrettes non magnétiques parallèles (43) en affleurement de la surface de galette ;
. on découpe des têtes magnétiques (49) au niveau des barrettes de chacune desdites galettes (40).

2. Procédé selon la revendication 1, caractérisé en ce que lors de la réalisation des deuxièmes perçages, on réalise des troisièmes perçages parallèles chacun à un deuxième perçage et formant avec celui-ci une paire de perçages latéraux $(32_{xy}, 33_{xy})$ symétriques, parallèles de part et d'autre de chacune desdites injections (31xy) de matériau non magnétique.

3. procédé suivant la revendication caractérisé en ce que ladite étape de découpage de tête magnétique est précédée d'une étape de dépôt de couches minces (44, 45) en matériau à forte perméabilité et faible coercivité sur la surface de la galette (40).

4. Procédé selon la revendication 2 caractérisé en ce que ledit dépôt de couches minces (44,45) en matériau à forte perméabilité et faible coercivité est réalisé sous forme de "papillons" juxtaposés.

5. Procédé selon la revendication 1 caractérisé en ce que le matériau dudit bloc magnétique (30) est la ferrite.

6. Procédé selon la revendication 1 caractérisé en ce que ledit matériau non magnétique est le verre.

7. Procédé selon la revendication 1 caractérisé en ce qu'au moins un desdits perçages latéraux $(32_{xy},33_{xy})$ est réalisé tangentiellement auxdites injections $(31_{xy})$ de matériau non magnétique.

8. Procédé selon la revendication 1 caractérisé en ce qu'au moins un desdits perçages latéraux $(32_{xy},33_{xy})$ est réalisé partiellement dans lesdites injections $(31_{xy})$ de matériau non magnétique, et dans ledit bloc magnétique(30).

9. Procédé suivant la revendication 1 caractérisé en ce que au moins un desdits perçages latéraux $(32_{xy},33_{xy})$ appartient à une famille comprenant un monoperçage cylindrique, une paire de perçages cylindriques juxtaposés, tangentiels ou en recouvrement, et un perçage de section transversale oblongue.

10. Procédé selon l'une quelconque des revendications 1 à 6 caractérisée en ce que ledit matériau non magnétique est injecté sous pression.

11. Procédé selon la revendication 1 caractérisée en ce qu'on love le bobinage d'induction (12) de la tête au moins partiellement dans le perçage latéral (32, 33 ; 42)

12. Tête magnétique obtenue selon le procédé de l'une quelconque des revendications 1 à 11.

Fig. 1

Fig. 2

Fig. 3

Fig. 4

Fig. 5

Fig. 6

EP 0 376 790 A1

Fig. 7

Fig. 8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | PATENT ABSTRACTS OF JAPAN vol. 6, no. 241 (P-158)(1119) 30 novembre 1982, & JP-A-57 141010 (HITACHI SEISAKUSHO K.K.) 01 septembre 1982, * le document en entier * | 1, 11, 12 | G11B5/31 G11B5/133 G11B5/187 |
| A | GB-A-1385946 (INTERNATIONAL COMPUTERS LTD.) * page 2, lignes 23 - 70 * * page 3, lignes 85 - 96; figures 2-6, 11, 13 * | 1, 5, 6, 10, 12 | |
| A | JP-A-63266603 (NEC KANSAI LTD) * le document en entier * | 1, 9 | |
| A | PATENT ABSTRACTS OF JAPAN vol. 5, no. 5 (P-44)(677) 14 janvier 1981, & JP-A-55 135327 (OLYMPUS KOGAKU KOGYO K.K.) 22 octobre 1980, * le document en entier * | 1, 3, 5, 8, 12 | |
| A | PATENT ABSTRACTS OF JAPAN vol. 10, no. 348 (P-519)(2404) 22 novembre 1986, & JP-A-61 148619 (SONY CORP) 07 juillet 1986, * le document en entier * | 1, 2, 6, 9, 12 | DOMAINES TECHNIQUES RECHERCHES (Int. Cl.5 ) G11B |
| A | US-A-3553389 (BARGER) | | |

Le présent rapport a été établi pour toutes les revendications

| Lieu de la recherche | Date d'achèvement de la recherche | Examinateur |
|---|---|---|
| LA HAYE | 04 AVRIL 1990 | FUX J. |